(19) Europäisches Patentamt European Patent Office Office européen des brevets

(11) EP 3 651 326 A1

(12) EUROPEAN PATENT APPLICATION

(43) Date of publication:
13.05.2020 Bulletin 2020/20

(51) Int Cl.:
H02K 21/02 (2006.01)        H02K 1/24 (2006.01)
H02K 1/27 (2006.01)

(21) Application number: 19220164.8

(22) Date of filing: 21.07.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 26.07.2016 RU 2016130689

(62) Document number(s) of the earlier application(s) in
accordance with Art. 76 EPC:
17834853.8 / 3 334 017

(71) Applicant: "Emach" Limited Liability Company
Moscow, 143026 (RU)

(72) Inventors:
• DMITRIEVSKII, Vladimir Aleksandrovich
622034 Nizhnii Tagil (RU)
• PRAKHT, Vladimir Alekseevich
622048 Nizhnii Tagil (RU)

(74) Representative: Chimini, Francesco
Jacobacci & Partners S.p.A.
Piazza della Vittoria 11
25122 Brescia (IT)

Remarks:
This application was filed on 31-12-2019 as a
divisional application to the application mentioned
under INID code 62.

(54) **SYNCHRONOUS RELUCTANCE MACHINE**

(57) The present invention relates to electrical engineering, particularly to synchronous reluctance machines, and can be used in electrical drives for machines and mechanisms, as well as in electrical power generators. The synchronous reluctance machine comprises a stator with a winding arranged within stator slots, and a rotor mounted to provide a gap between the rotor and the stator, the rotor being rotatable with respect to the stator and comprising radially alternating magnetically permeable layers and flux barriers, wherein each barrier comprises at least one peripheral end extending towards the circumferential rotor surface and the angular pitch of the peripheral ends decreases in circumferential direction from the peripheral ends of the outer barriers towards the peripheral ends of the deepest inner barriers among at least three circumferentially sequential peripheral ends, wherein at least two of said ends are inner barrier ends. This results in improved energy characteristics of the reluctance machine, in particular power factor, efficiency and specific power thereof, for the same number of flux barriers. This is further achieved by a synchronous reluctance machine comprising a stator with a winding arranged within stator slots, and a rotor mounted to provide a gap between the rotor and the stator, the rotor being rotatable with respect to the stator and comprising radially alternating magnetically permeable layers and flux barriers, the gap is increased by 15-400% between the surface of the most external magnetically permeable layer and the stator compared to other sections of the gap.

Fig. 1

**Description**

Field of the Invention

The present invention relates to electronic engineering, particularly to synchronous reluctance machines, and can be used in electrical drives for machines and mechanisms, as well as in electrical power generators.

Background of the Invention

Synchronous reluctance machines are machines with a magnetically inhomogeneous rotor. The main idea for creating torque (rotational torque) in a synchronous reluctance machine is based on that the rotor tends to be oriented in a position providing maximum magnetic permeability to the magnetic field of the stator. Synchronous reluctance machines can be implemented without magnets in rotor structure or with magnets in the rotor.

Energy and specific characteristics of a synchronous reluctance machine can be improved by adding magnets to the rotor structure. The main idea for creating torque (rotational torque) remains identical to that of a synchronous reluctance machine without magnets in the rotor.

A synchronous reluctance machine is known, e.g, from US 5818140. This machine comprises a stator with slots and a rotor of the transverse lamination type. The rotor is mounted to provide an air gap separating the stator from the rotor. Flux barriers extend to the air gap and peripheral ends of the flux barriers are positioned in so-called "pitch points" on the rotor surface. The pitch points are arranged equidistant from each other. Some pitch points can be virtual (not comprising ribs). The machine disclosed in US 5818140 provides low torque ripple. However, this machine fails to achieve maximum rotor anisotropy at equal number of flux barriers, which leads to low energy characteristics (efficiency, power factor, specific torque).

US8638012 discloses a rotor for a synchronous reluctance machine, wherein torque ripple is reduced by altering the geometry of magnetic flux barriers arranged in the rotor. Reference points arranged along the perimeter are used as an additional structure, wherein the pitch angle between adjacent reference points arranged between adjacent q-axes is the same for the entire structure. Ribs arranged on the rotor circumference are located at pitch points deviating from the reference points for an angular distance of up to 2.5°. This machine fails to achieve maximum rotor anisotropy, and therefore its energy characteristics (efficiency, power factor) are low.

A synchronous reluctance machine of US 6239526 is considered to be the closest prior art to the present invention. This machine comprises a stator with a plurality of slots and teeth. Further, the machine comprises a rotor with a plurality of flux barriers, each of the flux barriers having a first rib and a second rib at opposite ends thereof. US 6239526 describes a pitch point calculation algorithm, wherein when the first rib faces the center of a slot of a stator, the second rib faces the center of a tooth of the stator. Disadvantageously, this machine has a lower rotor anisotropy value for a fixed number of flux barriers, and therefore, low energy characteristics (efficiency, power factor) and low specific characteristics (specific torque and specific power).

Thus, it is an object of the present invention to increase energy characteristics (efficiency, power factor) and to increase specific characteristics (specific torque and specific power) of the synchronous reluctance machine for a fixed number of its flux barriers.

Summary of the Invention

The object is achieved by a synchronous reluctance machine comprising a stator with a winding arranged within stator slots, and a rotor mounted to provide a gap between the rotor and the stator, the rotor being rotatable with respect to the stator and comprising radially alternating magnetically permeable layers and flux barriers, wherein each barrier comprises at least one peripheral end extending towards the circumferential rotor surface, wherein the angular pitch of the peripheral ends decreases in circumferential direction from the peripheral ends of the outer barriers towards the peripheral ends of the deepest inner barriers among at least three circumferentially sequential peripheral ends, and wherein at least two of said ends are inner barrier ends.

This results in improved energy characteristics of the reluctance machine, in particular power factor, efficiency and specific power thereof for the same number of flux barriers.

In one preferred embodiment, for any sequence of n+1 angular pitches, where n≥2, the sequence including the angular pitch ($\alpha_0$) defined by the peripheral ends of the two deepest inner barriers, the closest angular pitch ($\alpha_n$) thereto being defined by the peripheral ends of at least one outer barrier, and all circumferentially sequential angular pitches therebetween (from $\alpha_1$ to $\alpha_{n-1}$, where $\alpha_1$ is the pitch immediately following pitch $\alpha_0$, and $\alpha_{n-1}$ is the pitch immediately preceding pitch $\alpha_n$), the following is true for at least one pair of sequential angular pitches:

$$\alpha_{m-1} < \alpha_m, \text{ where } 0 < m < n.$$

In one preferred embodiment, for any sequence of n+1 angular pitches, where n≥2, the sequence including the angular pitch ($\alpha_0$) defined by the peripheral ends of the two deepest inner barriers, the closest angular pitch ($\alpha_n$) thereto being defined by the peripheral ends of at least one outer barrier, and all circumferentially sequential angular pitches therebetween (from $\alpha_1$ to $\alpha_{n-1}$, where $\alpha_1$ is the pitch immediately following pitch $\alpha_0$, and $\alpha_{n-1}$ is the pitch immediately preceding pitch $\alpha_n$), the following is true:

$$\alpha_0 < \alpha_1 \text{ and } \alpha_0 \leq \alpha_2.$$

In one preferred embodiment, for the angular pitch ($\alpha_0$) defined by the peripheral ends of the two deepest inner barriers and for the closest angular pitch ($\alpha_1$) thereto, the following is true:

$$\alpha_0 < \alpha_1.$$

In one preferred embodiment, for any sequence of n+1 angular pitches, where n≥2, the sequence including the angular pitch ($\alpha_0$) defined by the peripheral ends of the two deepest inner barriers, the closest angular pitch ($\alpha_n$) thereto being defined by the peripheral ends of at least one outer barrier, and all circumferentially sequential angular pitches therebetween (from $\alpha_1$ to $\alpha_{n-1}$, where α1 is the pitch immediately following pitch $\alpha_0$, and $\alpha_{n-1}$ is the pitch immediately preceding pitch $\alpha_n$), the following is true:

$$\alpha_{m-1} < \alpha_m, \text{ where } 0 < m \leq n.$$

In one preferred embodiment, magnetically permeable layers are connected via inner and/or peripheral links, wherein peripheral links separate peripheral ends of barriers from the gap.

In one preferred embodiment, the flux barriers reach the gap, and the angular pitch is defined as the angular distance between pitch points which are midpoints of outer circumference arcs of the transverse projection of the rotor, the arcs separating circumferentially adjacent magnetically permeable layers.

In one preferred embodiment, the peripheral ends of the flux barriers are separated from the gap by a peripheral link, and the angular pitch is defined as the angular distance between pitch points located on the circumference of the cross-section of the rotor, the pitch points corresponding to the midpoint of a link section of minimum thickness in the direction of the gap.

In one preferred embodiment, the peripheral ends of the flux barriers are separated from the gap by a peripheral link, and the angular pitch is defined as the angular distance between pitch points located on the circumference of the cross-section of the rotor, the pitch points corresponding to the midpoint of a link section having a thickness in the direction of the gap differing by no more than 5% from the minimum link thickness in the direction of the gap.

Preferably, the peripheral ends of the flux barriers are separated from the gap by a peripheral link, and the angular pitch is defined as the angular distance between pitch points located on the circumference of the cross-section of the rotor, the pitch points corresponding to the midpoint of a link section having a thickness in the direction of the gap differing by no more than 20% from the minimum link thickness in the direction of the gap.

Stator winding of the synchronous reluctance machine can be concentrated or distributed.

The rotor can comprise sheets with transverse lamination or with longitudinal lamination.

Preferably, at least one of the flux barriers comprises a permanent magnet or several permanent magnets.

Preferably, the gap is increased between the surface of the most external magnetically permeable layer and the stator compared to other sections of the gap.

The object is further achieved by a synchronous reluctance machine comprising a stator with a winding arranged within stator slots, and a rotor mounted to provide a gap between the rotor and the stator, the rotor being rotatable with respect to the stator and comprising radially alternating magnetically permeable layers and flux barriers, wherein the gap is increased by 15-400% between the surface of the most external magnetically permeable layer and the stator compared to other sections of the gap.

The increased gap provides better energy characteristics of the reluctance machine, in particular power factor, efficiency, specific torque and specific power.

Preferably, the gap is increased by 15-200% between the surface of the most external magnetically permeable layer and the stator compared to other sections of the gap.

Preferably, at least one flux barrier comprises a permanent magnet or several permanent magnets.

Brief description of the drawings

The present invention is further described in the context of specific embodiments with reference to the accompanying drawings, wherein:

Fig. 1 illustrates a rotor structure according to an embodiment;
Fig. 2 schematically illustrates distribution of magnetic flux paths according to one embodiment;
Fig. 3 schematically illustrates the process of selecting pitch angles;
Fig. 4 illustrates a rotor structure comprising cutouts according to one embodiment;
Figs. 5 and 6 illustrate a rotor structure comprising magnets according to one embodiment.
Figs. 7 and 8 illustrate a rotor structure comprising cutouts and magnets according to one embodiment.

Detailed Description of the Invention

The embodiments of the disclosed synchronous reluctance machine (SynRM) are aimed at increasing its energy characteristics (efficiency, specific torque and specific power) for a fixed number of flux barriers.

In one embodiment, the SynRM comprises a stator with a winding arranged within stator slots, and a rotor mounted to provide a gap between the rotor and the stator, the rotor being rotatable with respect to the stator. Stator winding can be distributed or concentrated.

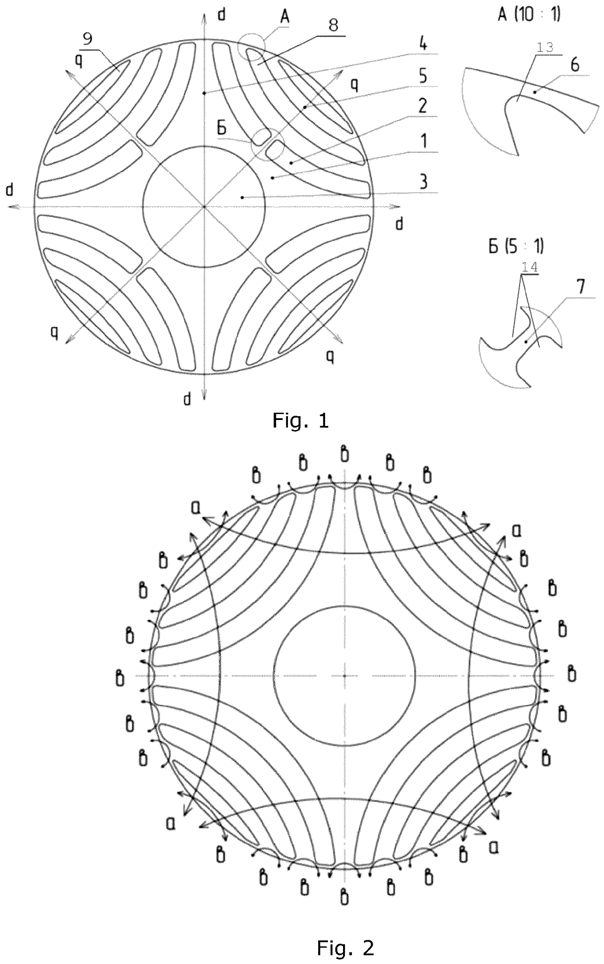

Fig. 1 illustrates a rotor structure. In one embodiment, the rotor is a steel cylinder comprised of sheets with transverse lamination. The rotor comprises alternatingly arranged magnetically permeable layers 1 (i.e., layers of high magnetic permeability) and flux barriers 2, 8 and 9 (i.e., layers of low magnetic permeability). Axis 4 of high magnetic permeability is defined as the d-axis, and axis 5 of low magnetic permeability is defined as the q-axis. The flux barriers 2, 8 and 9 are formed by cutting longitudinal slits in the sheets. The flux barriers 2, 8 and 9 each have an elongated shape and comprise barrier ends. The barrier ends extending towards the circumferential rotor surface are referred to as peripheral barrier ends 13, and the barrier ends extending into the rotor are referred to as inner barrier ends 14. The barrier 2 has one peripheral barrier end and one inner barrier end, whereas the barriers 8 and 9 each have two peripheral barrier ends. Rotor integrity is provided by thin links connecting the magnetically permeable layers 1. Links arranged on the rotor circumference are referred to as peripheral links 6, while the remaining links are referred to as inner links 7. The peripheral links 6 separate the peripheral barrier ends from the gap. The inner links separate individual barriers from each other. The rotor is arranged on a shaft 3. In another embodiment, the rotor is formed as a steel cylinder comprised of sheets with longitudinal lamination. In this case, the flux barriers 2, 8 and 9 reach or extend up to the air gap.

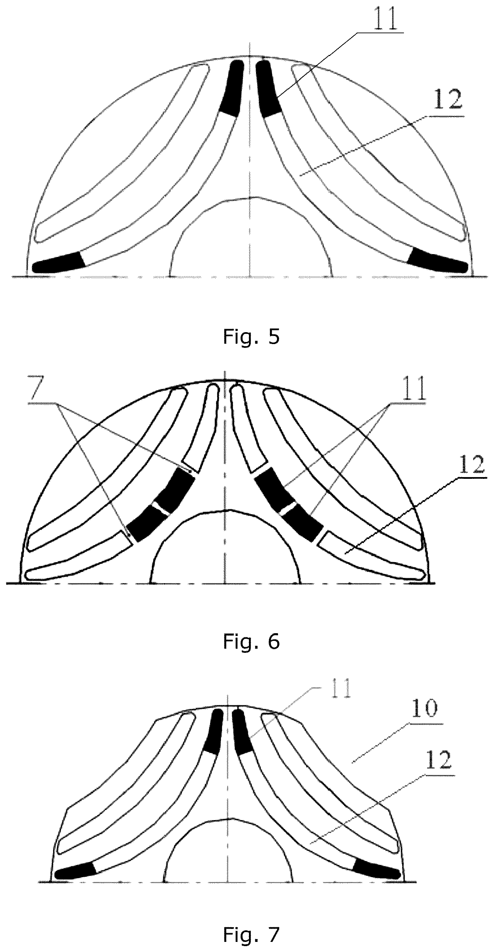

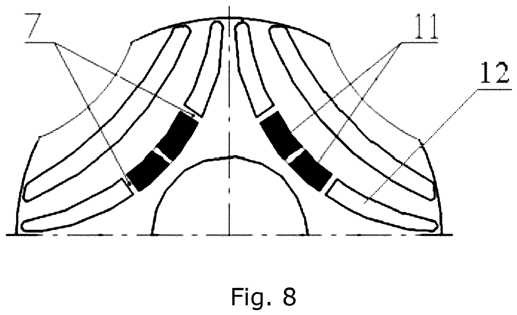

Figs. 5 and 6 illustrate a rotor structure according to one embodiment with permanent magnets 11 mounted into one or more flux barriers 12. In some embodiments, the permanent magnets can be mounted into all flux barriers 12. The permanent magnets 11 take up a portion of the flux barrier 12. As shown in Fig. 8, the rotor comprises the inner links 7 providing more accurate positioning of the permanent magnets 11 to alleviate rotor imbalance. The links 7 further provide mechanical stability for the rotor. In another one embodiment, the permanent magnets 11 can take up the entirety of one or more flux barriers.

Further description requires explanation of the term "pitch point".

When the barriers reach the gap, the pitch point is the midpoint of the outer circumference arc of the transverse projection of the rotor, said arc separating circumferentially adjacent magnetically permeable layers, and when peripheral ends of the barriers are separated from the gap by a peripheral link, the pitch point is located on the circumference of the cross-section of the rotor and corresponds to the midpoint of a link section of minimum thickness in the direction of the gap. The angular distance between adjacent pitch points defines the angular pitch of the peripheral ends of flux barriers.

In another one embodiment, when peripheral ends of the flux barriers are separated from the gap by a peripheral link, the pitch point is located on the circumference of the cross-section of the rotor and corresponds to the midpoint of a link section having a thickness in radial direction differing by no more than 20%, preferably by no more than 5%, from the minimum link thickness in the direction of the gap.

The alternating current passing along stator windings forms a rotating magnetic field in the air gap. Rotational torque is formed due to the fact that the rotor strives to position the rotor axis 4 of high magnetic permeability (d-axis) in such manner with respect to the magnetic field as to minimize magnetic reluctance in the magnetic circuit.

Fig. 2 schematically illustrates the q-axis magnetic flux path. A portion of the q-axis magnetic flux (macroscopic flux a) travels in a transverse direction with respect to the flux barriers. Another portion of the q-axis magnetic flux (microscopic flux b) travels over the magnetically permeable layers between adjacent pitch points due to the finite thickness of the magnetically permeable layers. The present invention is aimed at decreasing the q-axis magnetic flux and therefore increasing magnetic anisotropy due to a decrease in the microscopic component.

Upon excitation of the q-axis flux, the absolute maximum value of magnetic differences of potential (MDP) is created on the q-axis. Conversely, a decrease in MDP at arc sections with identical angular size is minimal in proximity of the q-axis and increases in the direction of the d-axis. The closer to the d-axis (and the further from the q-axis), the smaller angular pitch should be selected.

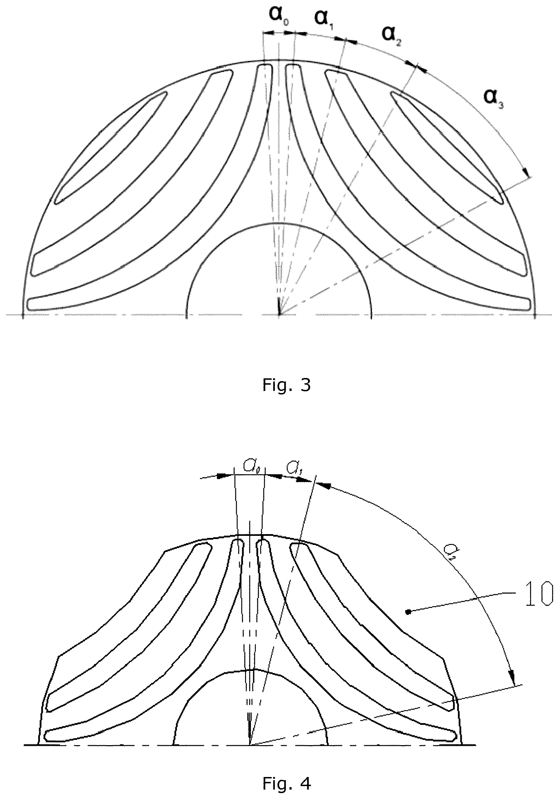

An example of selecting angular pitch ratios for three flux barriers per pole is illustrated in Fig. 3.

When n=3, angular pitches are selected using the following formula:

$$\alpha_{m-1} < \alpha_m, \text{ where } 0 < m \leq n, \tag{1}$$

where

$\alpha_m$ is a pitch in the direction away from the d-axis;

$\alpha_0$ is the angular size of the pitch enclosing the d-axis; and $\alpha_n$ is the angular pitch enclosing the q-axis.

Each pitch encloses one area of high magnetic permeability. As seen in Fig. 3, the following inequations are true for the angular pitches: $\alpha_0 < \alpha_1$, $\alpha_1 < \alpha_2$ and $\alpha_2 < \alpha_3$.

Although in the above example with reference to Fig. 3 the ratio of angular pitches $\alpha_m$ is shown and described for one section of the arc between q-axis and d-axis, it should be noted that the same ratio of angular pitches $\alpha_m$ is also typical for other sections of the arc between q-axis and d-axis.

The number (n) of flux barriers per pole is not necessarily 3 and can be a different number.

In use, the present invention provides a decrease in microscopic stray flux and, consequentially, an increase in power factor, efficiency, specific torque and specific power.

Due to factors specific to designing SynRMs outside the scope, particularly due to strength calculation or heat calculation requirements, a compromise may be necessary, wherein the inequation (1) is partially untrue. Therefore, in some embodiments, the principle of selecting the angular pitch to be smaller in the direction away from q-axis (and therefore, towards the d-axis) in order to increase the magnetic anisotropy of the rotor can be partially implemented through other ratios between the angular pitches of pitch points.

In particular, in one embodiment, the angular pitches are selected in accordance with the following formula:

$$\alpha_{m-1} < \alpha_m, \text{ where } 0 < m < n, \tag{2}$$

wherein the inequation is true for at least one pair of sequential angular pitches.

In another one embodiment, for a sequence of 4 angular pitches including the angular pitch $\alpha_0$ defined by the peripheral ends of two inner barriers 2, the angular pitch $\alpha_3$ closest thereto and defined by the peripheral ends of the outer barrier 9, and all angular pitches $\alpha_1$-$\alpha_2$, the following is true:

$$\alpha_0 < \alpha_1 \text{ and } \alpha_0 \leq \alpha_2. \tag{3}$$

In another one embodiment, for the angular pitch $\alpha_0$ defined by the peripheral ends of the two deepest inner barriers 2 and for the closest angular pitch thereto ($\alpha_1$), the following is true:

$$\alpha_0 < \alpha_1. \tag{4}$$

It should be noted that although in some embodiments, the angular pitch of the peripheral ends of flux barriers is determined as the angular distance between pitch points, in other embodiments, said angular pitch can be determined using any suitable method.

In yet another embodiment shown in Fig. 4, the rotor comprises a cutout 10 in the proximity of the q-axis. The deviations from the cylindrical shape of the rotor increase magnetic anisotropy and decrease magnetic flux leakage in the higher harmonics of the stator, thus increasing energy characteristics of the machine (efficiency, power factor) and increasing its specific characteristics (specific torque and specific power).

In yet another embodiment, the gap between the outer magnetically permeable layer and the stator is increased by 15-400%, preferably by 15-200%, compared to other sections of the gap due to said cutout 10. Small deviations from the cylindrical shape of the rotor allow it to retain excellent hydrodynamic characteristics, eliminate magnetic flux leakage and the q-axis flux, increase magnetic anisotropy, and only marginally impede flux path on the d-axis, thus further increasing energy characteristics of the machine (efficiency, power factor) and increasing its specific characteristics (specific torque and specific power).

Figs. 7 and 8 illustrate a rotor structure with cutouts according to one embodiment of the invention, with permanent magnets 11 mounted into one or more flux barriers 12. In some embodiments, the permanent magnets can be mounted into all flux barriers 12. The permanent magnets 11 take up a portion of the flux barrier 12. As can be seen in Fig. 9, the rotor comprises inner links 7 providing more accurate positioning of permanent magnets 11 to alleviate rotor imbalance. The links 7 further provide mechanical stability for the rotor. In another one embodiment, the permanent magnets 11 can take up the entirety of one or more flux barriers, or of all flux barriers.

The cutout does not affect the above-described pitch angle ratios or link positioning, and therefore formulae (1), (2), (3) and (4) are true for the present SynRM with cutouts.

However, in other embodiments, said cutouts can also be used in SynRMs wherein the angular pitch is not selected to be smaller in the direction towards the d-axis and further away from the q-axis, particularly wherein formulae (1), (2), (3) and (4) are not true, but wherein an increase in energy characteristics of the machine (efficiency, power factor) and its specific characteristics (specific torque and specific power) is still achieved.

It should be noted that in the foregoing description, the disclosure of properties or features of the synchronous reluctance machine in the context of a section of the rotor arc and/or d-axis area and/or q-axis area is should be interpreted as encompassing all analogous sections of the rotor arc and/or d-axis areas and/or q-axis areas.

The embodiments described above are provided as nonlimiting examples and should not be construed as limiting the spirit and scope defined by the accompanying claims.

**Claims**

1. A synchronous reluctance machine comprising:

   a stator with a winding arranged within stator slots,
   a rotor mounted to provide a gap between the rotor and the stator, the rotor being rotatable with respect to the stator and
   comprising radially alternating magnetically permeable layers and flux barriers,
   wherein
   the gap is increased by 15-400% between the surface of the most external magnetically permeable layer and the stator compared to other sections of the gap.

2. The machine according to claim 1, wherein the gap is increased by 15-200% between the surface of the most external magnetically permeable layer and the stator compared to other sections of the gap.

3. The machine according to claim 1 or 2, wherein at least one flux barrier comprises a permanent magnet or several permanent magnets.

4. The machine according to claim 1, wherein the winding is concentrated.

5. The machine according to claim 1, wherein the winding is distributed.

6. The machine according to claim 1, wherein the rotor comprises sheets with transverse lamination.

7. The machine according to claim 1, wherein the rotor comprises sheets with longitudinal lamination.

Fig. 1

Fig. 2

Fig. 3

Fig. 4

Fig. 5

Fig. 6

Fig. 7

Fig. 8

**EP 3 651 326 A1**

Europäisches
Patentamt

European
Patent Office

Office européen
des brevets

# EUROPEAN SEARCH REPORT

Application Number

EP 19 22 0164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/120564 A1 (ABB RESEARCH LTD [CH]; MAGNUSSEN FREDDY [SE] ET AL.) 6 October 2011 (2011-10-06) * abstract; figures 1,6,9,10 * * page 1 * ----- | 1-3 | INV. H02K21/02 H02K1/24 H02K1/27 |
| X | WO 2015/177565 A1 (TECHNELEC LTD [GB]) 26 November 2015 (2015-11-26) * abstract; figures 1,15 * * page 1, lines 15-19 * * page 4, lines 19-20 * ----- | 1,2,4-7 | |
| X | US 2012/062053 A1 (MOGHADDAM REZA RAJABI [SE]) 15 March 2012 (2012-03-15) * abstract; figures 2,3 * * paragraphs [0003], [0029] * ----- | 1,2 | |
| A | EP 2 099 114 A2 (HITACHI LTD [JP]) 9 September 2009 (2009-09-09) * paragraph [0061] * ----- | 4,5 | |
| | | | TECHNICAL FIELDS SEARCHED (IPC) |
| | | | H02K |

The present search report has been drawn up for all claims

| Place of search | Date of completion of the search | Examiner |
|---|---|---|
| The Hague | 9 March 2020 | Güvener, Cem |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 22 0164

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2020

| Patent document cited in search report | | Publication date | Patent family member(s) | | Publication date |
|---|---|---|---|---|---|
| WO 2011120564 | A1 | 06-10-2011 | NONE | | |
| WO 2015177565 | A1 | 26-11-2015 | CN | 106575891 A | 19-04-2017 |
| | | | EP | 3146618 A1 | 29-03-2017 |
| | | | GB | 2529604 A | 02-03-2016 |
| | | | JP | 6419950 B2 | 07-11-2018 |
| | | | JP | 2017517243 A | 22-06-2017 |
| | | | US | 2017201136 A1 | 13-07-2017 |
| | | | WO | 2015177565 A1 | 26-11-2015 |
| US 2012062053 | A1 | 15-03-2012 | BR | PI0924419 A2 | 26-01-2016 |
| | | | CN | 102349220 A | 08-02-2012 |
| | | | EP | 2406870 A1 | 18-01-2012 |
| | | | EP | 3086450 A1 | 26-10-2016 |
| | | | JP | 5726768 B2 | 03-06-2015 |
| | | | JP | 2012520055 A | 30-08-2012 |
| | | | KR | 20110138365 A | 27-12-2011 |
| | | | US | RE46867 E | 22-05-2018 |
| | | | US | 2012062053 A1 | 15-03-2012 |
| | | | WO | 2010102671 A1 | 16-09-2010 |
| EP 2099114 | A2 | 09-09-2009 | EP | 2099114 A2 | 09-09-2009 |
| | | | JP | 4708448 B2 | 22-06-2011 |
| | | | JP | 2009213256 A | 17-09-2009 |
| | | | US | 2009224627 A1 | 10-09-2009 |
| | | | US | 2012274160 A1 | 01-11-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5818140 A
- US 8638012 B

- US 6239526 B